# EUROPEAN PATENT SPECIFICATION

(11) **EP 1 361 626 B1**
(45) Date of publication and mention of the grant of the patent: **29.08.2007**
(21) Application number: 03250873.1
(22) Date of filing: 12.02.2003
(51) Int. Cl.: H01Q 5/02, H01Q 9/16, H01Q 9/30

(54) **Image-frequency-rejection antenna**
Antenne mit Spiegelfrequenzunterdrückung
Antenne de rejet de la fréquence-image

(30) Priority: 06.05.2002 KR 2002024748
(43) Date of publication of application: 12.11.2003
(73) Proprietor: SAMSUNG ELECTRONICS CO., LTD., Suwon-City, Kyungki-do (KR)
(72) Inventor: Kwon, Do-hoon, Eunpyeong-gu, Seoul (KR)
(74) Representative: Anderson, James Edward George

(56) References cited:
- EP-A- 0 893 840
- GB-A- 1 007 791
- US-A- 2 270 416
- US-A- 2 282 292
- US-A- 5 054 117

## Description

The present invention relates to an image-frequency-rejection antenna having a function for intercepting an image frequency signal among signals received from an antenna.

Nowadays, an analog unit of a receiver for wireless communications includes an antenna and a function for converting an electrical signal that is received from the antenna, into a low frequency signal or a baseband signal centered at direct current (DC). In a structure in which an image frequency exists (i.e., heterodyne system) among structures of receivers, a function for suppressing a noise signal in an image band is one of the important factors that determines reception performances of receivers. Methods for suppressing an image include methods for using an image-frequency-rejection filter, an image-frequency-rejection mixer, or a weaver, and these methods have been studied for a long time. Conventional methods for image-rejection suppress an image component in a subsequent circuit including a band selection filter after a signal received from an antenna passes through an impedance matching circuit.

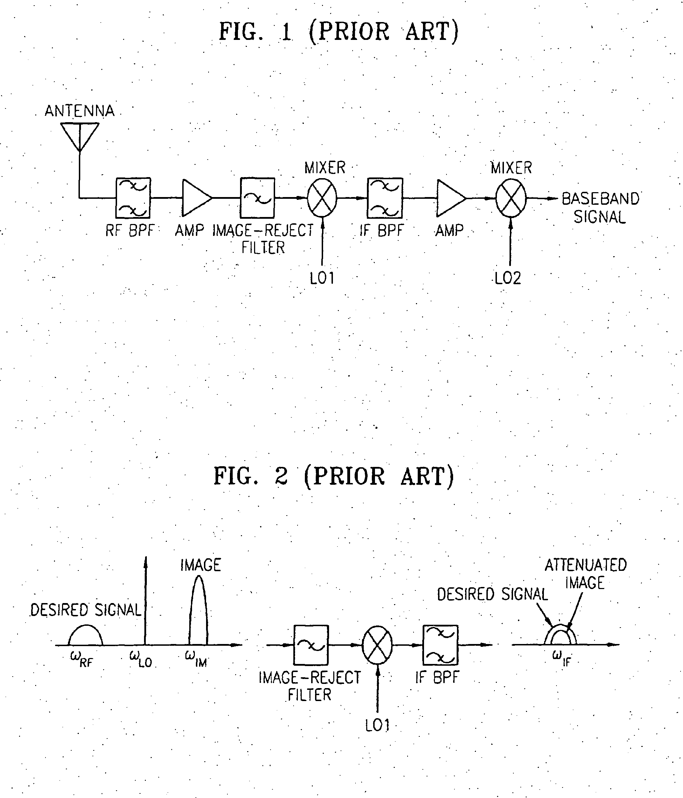

FIG. 1 shows a block diagram of a heterodyne receiver, as a representative example of a receiver having an image frequency component in a received signal. FIG. 2 shows a frequency region spectrum of a radio frequency (RF) input signal of an image-frequency-rejection filter and an output signal of a downconversion mixer when a desired signal and an image signal pass through the image-frequency-rejection filter and the downconversion mixer in the heterodyne receiver of FIG. 1. In this case, it was assumed that a large interference signal exists in an image band among signals that are received from an antenna and passes through a matching circuit.

Antennas have different characteristics depending on frequencies in view of electrical characteristics. According to a design principle of traditional antenna and matching circuit, an antenna is designed to convert an over-the-air broadcast signal in a desired frequency band, into an electrical signal effectively, and a corresponding matching circuit is designed to convert an input impedance of the antenna at a desired frequency, into a reference impedance (usually, 50Ω) without losses. That is, an interest frequency of designing both the antenna and the matching circuit is limited to a desired band, and the characteristics of the antenna and the matching circuit at a frequency other than the desired band are not well considered.

Thus, a method which effectively receives a signal having a desired frequency band and suppresses an image noise signal in an antenna and a matching circuit for matching the antenna with a stipulated impedance line, has not been known yet.

US 5054117 discloses a tunable/switchable notch filter for the front end of an RF receiver for removing an image signal.

According to the invention, there is provided an image-frequency-rejection antenna apparatus comprising: a monopole or dipole antenna adapted to receive a wireless signal of a predetermined signal frequency (ω_{RF}) at a feeding point of the antenna; and an image-frequency-rejection unit adapted to remove an image signal having a predetermined image frequency (ω_{IM}) from a signal received by the antenna, the image-frequency-rejection unit comprising a notch filter adapted to resonate at the frequency (ω_{IM}) of the image signal, characterized in that the image-frequency-rejection unit is connected within the antenna at a distance (I_{IM}) from the feeding point of the antenna that is shorter than a quarter wavelength of the image signal.

Preferably, the image-frequency-rejection unit is further connected to a ground point, and is shorted at the frequency (ω_{IM}) of the image signal.

Preferably, the image-frequency-rejection unit is manufactured by an open stub having a length of 1/4 of the wavelength (λ_{IM}) of the image signal.

Preferably, the image-frequency-rejection unit is a notch filter adapted to resonate at a frequency (ω_{IM}) of the image signal.

The antenna apparatus may be for receiving a predetermined signal and providing the signal to a RF circuit unit for performing a predetermined function, and the antenna may further comprise a second image-frequency-rejection unit for removing the image signal, and an impedance matching unit for matching an impedance of the antenna apparatus with an impedance of the RF circuit unit and providing the received signal, from which the image signal is removed, to the RF circuit unit.

The second image-frequency-rejection unit may be a band-pass filter (BPF) positioned in parallel in the front or rear of the impedance matching unit adapted to pass only a frequency (ω_{IM}) of the image signal.

The second image-frequency-rejection unit may be a notch filter positioned in series in the front or rear of the impedance matching unit adapted to pass all frequencies except a frequency (ω_{IM}) of the image signal.

The invention thus provides an image-frequency-rejection antenna apparatus which rejects an image component signal and an antenna for receiving a wireless signal and a matching circuit for matching the antenna apparatus with a stipulated impedance line.

The invention will now be describing in detail with reference to the attached drawings in which:
FIG. 1 shows a block diagram of a heterodyne receiver, as a representative example of a receiver having an image frequency component in a received signal;
FIG. 2 shows a frequency region spectrum of a radio frequency (RF) input signal of an image-frequency-rejection filter and an output signal of a downconversion mixer when a desired signal and an image signal pass through the image-frequency-rejection filter and the downconversion mixer in the heterodyne receiver of FIG. 1;
FIG. 3 shows a dipole antenna and a monopole antenna having an additional image-frequency-rejection function;
FIG. 4 is a graph showing the size of a reflection loss with respect to a stipulated impedance 50Ω of both an image-frequency-rejection dipole antenna for a Korean PCS communication band and a conventional antenna;
FIG. 5 is a graph showing the case where the reflection loss of FIG. 4 is converted into an impedance mismatch factor and how effective the image-frequency-rejection antenna and the conventional antenna receive and transmit a signal;
FIG. 6 shows the structure in which a band-pass filter (BPF) that passes a signal having an image frequency is positioned in parallel in the end of an impedance matching circuit;
FIG. 7 shows the structure in which a notch filter that does not pass a signal having an image frequency is positioned in series in the end of the impedance matching circuit; and
FIG. 8 shows the structure in which an input impedance at an image frequency is 0 using an open-stub tuner.

Hereinafter, the present invention will be described in detail by describing preferred embodiments of the invention with reference to the accompanying drawings.

If an image frequency existence method is adopted to design the structure of a receiver, a corresponding image frequency band cannot be precisely known. Thus, the fact that a noise component in an image band where an image signal exists should be suppressed in a circuit, can be applied to design an antenna and an antenna matching circuit. Accordingly, an antenna can be designed to receive a signal having a desired frequency band effectively and simultaneously not to receive a signal having an image frequency band. In addition, an antenna matching circuit can be designed to pass a signal in a frequeny band of a desired signal and not to pass a signal having an image frequency band. If the antenna and the antenna matching circuit that are designed as above are independently constituted or combined with each other, even though there is an over-the-air broadcast-shaped large image noise component, small noise is received, and a smaller quantity of image noise is transmitted to a subsequent circuit.

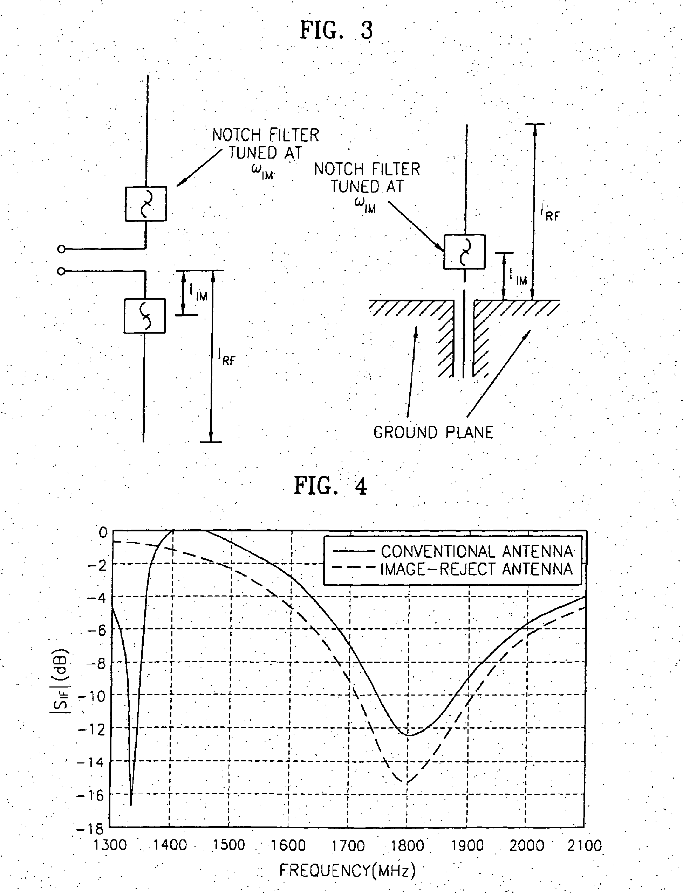

FIG. 3 shows an example where the present invention is applied to dipole and monopole wire antennas. The length of the entire wire is I_{RF}, and a notch (band-stop) filter is installed in the location of a length I_{IM} from a feeding point. The stop frequency band of the installed notch filter is equal to an image frequency band. Hence, in view of electrical characteristics, the antenna of FIG. 3 is the same thing that it has the length I_{IM} in the image frequency band and it has the length I_{RF} in other frequency band including a desired frequency.

According to antenna engineering, if the length of the wire antenna is very smaller than wavelength corresponding to an operating frequency, the real number part of the input impedance of the antenna is near 0, and its imaginary number part becomes very large. Assuming the antenna is connected to a feeding line having a standard impedance (i.e., 50Ω), the antenna can hardly perform transmission and reception functions at a corresponding frequency. If the notch filter is installed to be near the feeding point so that the length of the antenna can be smaller than corresponding wavelength in an image noise frequency band, the antenna hardly receives a signal having the image frequency band. An image frequency is f_{IM}, and wavelength corresponding to the image frequency f_{IM} is λ_{IM}. And a relation of I_{IM} << λ_{IM}/4 is satisfied. In addition, a desired frequency is f_{RF}, and wavelength corresponding to the frequency f_{RF} is λ_{RF}. In the state where the notch filter is inserted, the length I_{RF} of the antenna is adjusted such that a reception function can be effectively performed at the frequency f_{RF}, that is, the input impedance of the antenna is near the standard impedance used.

The antenna performs transmission and reception functions at the frequency f_{RF} and hardly performs transmission and reception functions at the image frequency f_{IM}. A problem with a conventional antenna is that the conventional antenna is designed to perform transmission and reception functions effectively at the frequency f_{RF} and thus receives a larger quantity of image noise at the image frequency f_{IM} compared to the antenna according to the present invention.

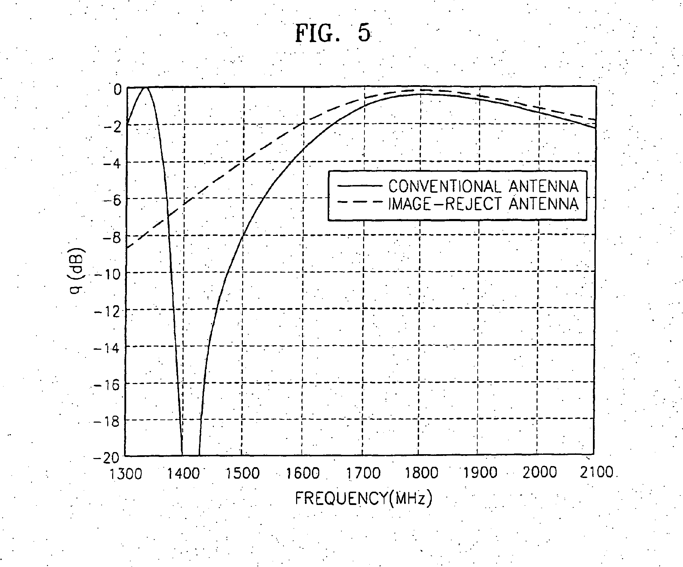

FIGS. 4 and 5 show the results of simulation in which the present invention is applied to a dipole antenna for a Korean PCS wireless terminal. FIGS. 4 and 5 show the case where a reflection loss S₁₁ and an impedance mismatch factor *q* = 1 - |*S*₁₁|² are marked by the function of a frequency at an antenna input terminal that is measured by an antenna designer with interest, respectively. As the value of S₁₁ becomes smaller, transmisison and reception functions are effectively performed at a corresponding frequency, and as the value of S₁₁ becomes larger, transmisison and reception funcitons are hardly performed due to impedance mismatches. Conversely, as the value of *q* is near 0dB, transmission and reception functions are effectively performed. A transmission frequency 1750 MHz to1780 MHz and a reception frequency 1840 MHz to 1870 MHz are used in Korean PCS communications, and a PCS terminal adopts a heterodyne type reception method, and its intermediate freqeuncy is 220.38 MHz. From these standard requirements, an image frequency band is set to 1399.2 MHz to 1429.2 MHz.

A dotted line represents S₁₁ of a conventional dipole antenna, and a full line represents S₁₁ of a dipole antenna according to the present invention. A LC parallel resonance filter is used for a band-pass filter (BPF), and a resonace point of the LC parallel resonance filter is set to 1414 MHz, as a middle point of the image frequency band. According to the present invention, S₁₁ is a little increased at a transmission and reception band (1750 MHz to 1870 MHz) of PCS, and thus a bandwidth is a little decreased. However, an increase in S₁₁ causes only a difference of 1dB in several minutes at *q*.

In the transmission and reception image frequency band, the value of q of the antenna according to the present invention is minimum 10dB lower than that of the conventional antenna. Thus, the antenna according to the present invention receives a smaller quantity of minimum 10dB of a noise component with respect to a noise signal of an image frequency that exists in an over-the-air broadcast shape.

A matching circuit can be also designed to have an image-frequency-rejection function. The matching circuit having an image-frequency-rejection function may be combined with the previous image-frequency-rejection antenna or the conventional antenna.

When there is a great difference in an input impedance of an antenna and a standard impedance in a desired frequency band, an impedance matching circuit converts the input impedance of the antenna into the standard impedance while minimizing losses in the matching circuit. In a conventional method for desiging a matching circuit, desired impedance conversion is preformed in a desired frequency band, but impedance conversion characteristics in other frequency band have not been considered. If a matching circuit is designed to perform impedance conversion in a desired frequency band and impedance mismatches in a desired image freqeuncy band, an image-frequency-rejection effect can be obtained in the matching circuit.

It is an object to set the size of the reflection loss S₁₁ to 1 in seeing the antenna and the matching circuit from a circuit. In order to set the size of S₁₁ to 1 when using the matching circuit without losses, input impedances of the antenna and the matching circuit may have pure imaginary number components or infinite R components. Thus, the matching circuit is only designed to have electrical characteristics of "short" or "breaking of wire" in an image frequency band.

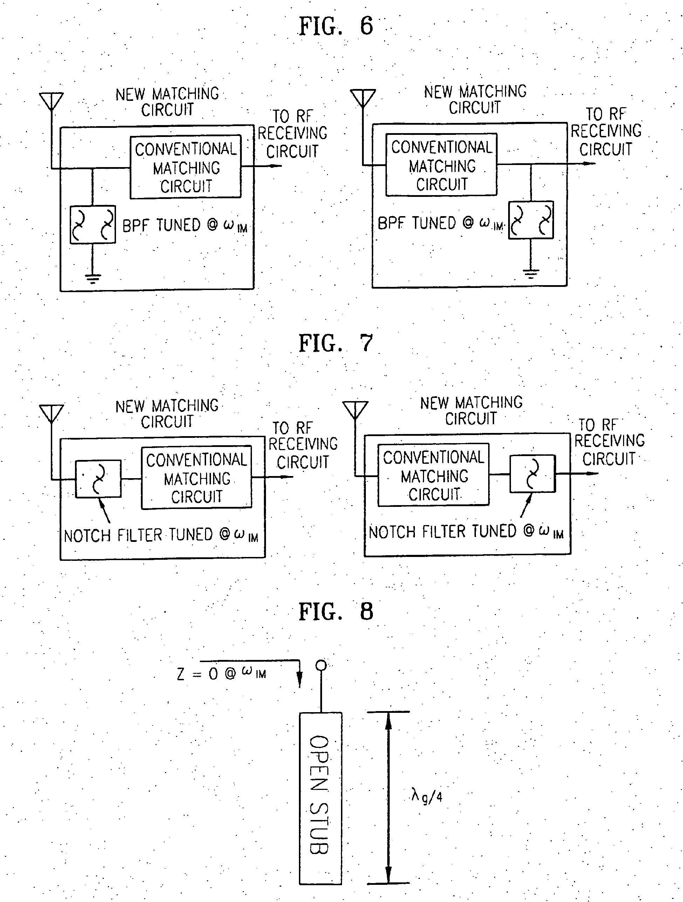

The electrical characteristics of "short" can be obtained by connecting the BPF which passes only an image frequency band, in parallel to the front or rear of an exisiting traditional matching circuit, and this is shown in FIG. 6. In this way, because of the BPF, the size of S₁₁ in seeing the antenna and the matching circuit from the image frequency band becomes 1. The remaining portions of a new matching circuit are designed by a traditional method such that the impeadance of the antenna at the frequency f_{RF} is converted into the standard impedance with a response at the frequency f_{RF} of the BPF.

The electrical characteristics of "breaking of wire" can be obtained by connecting the notch filter which does not pass only the image frequency band, in series, and this is shown in FIG. 7. The remaining portions of the matching circuit excluding the notch filter are designed to convert the impedance of the antenna at the frequency f_{RF} into the standard impedance.

When the matching circuit is constitued by combination of elements without losses, such as L and C, if the BPF or notch filter in the image frequency band is used, it is assured that the size S₁₁ is 1 at the image frequency f_{lM}. If the remaining portions of the matching circuit are designed in consideration of the effect at the frequency of the BPF and the notch filter, the size of S₁₁ can be minimized at the frequency f_{RF}, and methods therefor are well known. In addition, when the BPF or notch filter is used, the filter is not necessarily positioned in a final terminal of the antenna of the matching circuit or a final terminal of a RF circuit, as shown in FIGS. 6 and 7. Even when elements/functioning portions of the filter is positioned in a middle location other than both final terminals of the entire matching circuit, the matching circuit performs an image-frequency-rejection function. FIGS. 6 and 7 show arrangements in which the filter is positioned at both final terminals of the matching circuit.

FIG. 8 shows the structure in which the length of an open stub is λ_{g}/4 and an impedance seen from an input terminal of the stub is 0, which is easily implemented by a printed circuit technique. Here, λ_{g} means a guided wavelength of a transmission line that is implemented on a printed circuit substrate.

According to the present invention, the noise component of the image frequency that is transmitted to the subsequent circuit, can be minimized or removed by including an image-frequency-rejection function when designing the antenna and the matching circuit, thereby realizing improved image-frequency-rejection performances of the entire receiver. In addition, if standard requirements of a system for desired image-frequency-rejection performances are defined, a circuit can be designed to solve part of the standard requirements of the system in the antenna and the impedance matching circuit and to obtain the remaining suppression amount in a circuit design portion, thereby reducing the standard requirements of the image-frequency-rejection performances added to the circuit.

While this invention has been particularly shown and described with reference to preferred embodiments thereof, it will be understood by those skilled in the art that various changes in form and details may be made therein without departing from the scope of the invention as defined by the appended claims.

## Claims

1. An image-frequency-rejection antenna apparatus comprising:
a monopole or dipole antenna adapted to receive a wireless signal of a predetermined signal frequency (ω_{RF}) at a feeding point of the antenna; and
an image-frequency-rejection unit adapted to remove an image signal having a predetermined image frequency (ω_{IM}) from a signal received by the antenna, the image-frequency-rejection unit comprising a notch filter adapted to resonate at the frequency (ω_{IM}) of the image signal,
**characterized in that** the image-frequency-rejection unit is connected within the antenna at a distance (I_{IM}) from the feeding point of the antenna that is shorter than a quarter wavelength of the image signal.

2. The image-frequency-rejection antenna apparatus as claimed in claim 1, wherein the image-frequency-rejection unit is further connected to a ground point, and is shorted at the frequency (ω_{IM}) of the image signal.

3. The image-frequency-rejection antenna apparatus as claimed in claim 1 or 2, wherein the image-frequency-rejection unit is manufactured by an open stub having a length of 1/4 of a wavelength (λ_{IM}) of the image signal.

4. The image-frequency-rejection antenna apparatus as claimed in any one preceding claim, wherein the antenna apparatus is for receiving a predetermined signal and providing the signal to an RF circuit unit for performing a predetermined function, and wherein the antenna apparatus further comprises:
a second image-frequency-rejection unit for removing the image signal; and
an impedance matching unit for matching an impedance of the antenna apparatus with an impedance of the RF circuit unit and providing the received signal, from which the image signal is removed, to the RF circuit unit.

5. The antenna apparatus as claimed in claim 4, wherein the second image-frequency- rejection unit is a band-pass filter positioned in parallel in the front or rear of the impedance matching unit adapted to pass only a frequency (ω_{IM}) of the image signal.

6. The antenna apparatus as claimed in claim 4, wherein the second image-frequency- rejection unit is a notch filter positioned in series in the front or rear of the impedance matching unit adapted to pass all frequencies except a frequency (ω_{IM}) of the image signal.

## Patentansprüche

1. Antennenvorrichtung zur Spiegelfrequenzunterdrückung umfassend:
eine Monopol- oder Dipolantenne ausgebildet zum Empfangen eines drahtlosen Signals einer bestimmten Signalfrequenz (ω_{RF}) an einem Speisepunkt der Antenne; und
eine Spiegelfrequenzunterdrückungseinheit, ausgebildet zum Eliminieren eines Spiegelsignals mit einer bestimmten Bildfrequenz (ω_{IM}) aus einem von der Antenne empfangenen Signal, wobei die Spiegelfrequenzunterdrückungseinheit einen Sperrfilter umfasst, der so ausgebildet ist, dass er bei der Frequenz (ω_{IM}) des Spiegelsignals eine Resonanzfrequenz aufweist,
**dadurch gekennzeichnet, dass** die Spiegelfrequenzunterdrückungseinheit in der Antenne in einem Abstand (I_{IM}) vom Speisepunkt der Antenne eingeschleift ist, der kürzer ist als ein Viertel der Wellenlänge des Spiegelsignals.

2. Antennenvorrichtung zur Spiegelfrequenzunterdrückung nach Anspruch 1, wobei die Spiegelfrequenzunterdrückungseinheit ferner mit einem Massepunkt verbunden ist und bei der Frequenz (ω_{IM}) des Spiegelsignals kurzgeschlossen ist.

3. Antennenvorrichtung zur Spiegelfrequenzunterdrückung nach Anspruch 1 oder 2, wobei die Spiegelfrequenzunterdrückungseinheit durch eine offene Stichleitung mit einer Länge von 1/4 der Wellenlänge (λ_{IM}) des Spiegelsignals gebildet ist.

4. Antennenvorrichtung zur Spiegelfrequenzunterdrückung nach einem der vorhergehenden Ansprüche, wobei die Antennenvorrichtung zum Empfangen eines bestimmten Signals vorgesehen ist und das Signal einer HF-Schaltungseinheit zuführt, so dass eine bestimmte Funktion ausgeführt wird, und wobei die Antennenvorrichtung ferner umfasst:
eine zweite Spiegelfrequenzunterdrückungseinheit zum Eliminieren des Spiegelsignals; und
eine Impedanzanpassungseinheit zum Anpassen einer Impedanz der Antennenvorrichtung an eine Impedanz der HF-Schaltungseinheit und Zuführen des empfangenen Signals, aus dem das Spiegelsignal eliminiert ist, zu der HF-Schaltungseinheit.

5. Antennenvorrichtung nach Anspruch 4, wobei die zweite Spiegelfrequenzunterdrückungseinheit ein Bandpassfilter ist, der parallel vor oder hinter der lmpedanzanpassungseinheit positioniert ist und so ausgebildet ist, dass er nur eine Frequenz (ω_{IM}) des Spiegelsignals durchlässt.

6. Antennenvorrichtung nach Anspruch 4, wobei die zweite Spiegelfrequenzunterdrückungseinheit ein Sperrfilter ist, der in Reihe vor oder hinter der Impedanzanpassungseinheit positioniert ist und so ausgebildet ist, dass er alle Frequenzen außer einer Frequenz (ω_{IM}) des Spiegelsignals durchlässt.

## Revendications

1. Dispositif d'antenne de rejet de fréquence image comprenant :
une antenne unipolaire ou dipôle adaptée pour recevoir un signal sans fil d'une fréquence de signal prédéterminée (ω_{RF}) au niveau d'un point d'alimentation de l'antenne ; et
une unité de rejet de fréquence image adaptée pour éliminer un signal image ayant une fréquence image prédéterminée (ω_{IM}) d'un signal reçu par l'antenne, l'unité de rejet de fréquence image comprenant un filtre à encoche adapté pour résonner à la fréquence (ω_{IM}) du signal image,
**caractérisé en ce que** l'unité de rejet de fréquence image est connectée à l'intérieur de l'antenne à une distance (I_{IM}) du point d'alimentation de l'antenne qui est plus courte qu'un quart de longueur d'onde du signal image.

2. Dispositif d'antenne de rejet de fréquence image selon la revendication 1, dans lequel l'unité de rejet de fréquence image est connectée en outre à un point de masse et est court-circuitée à la fréquence (ω_{IM}) du signal image.

3. Dispositif d'antenne de rejet de fréquence image selon la revendication 1 ou 2, dans lequel l'unité de rejet de fréquence image est réalisée par un tronçon de ligne ouvert ayant une longueur de 1/4 d'une longueur d'onde (λ_{IM}) du signal image.

4. Dispositif d'antenne de rejet de fréquence image selon l'une quelconque revendications précédentes, dans lequel le dispositif d'antenne est destiné à recevoir un signal prédéterminé et fournir le signal à une unité de circuit RF pour exécuter une fonction prédéterminée, et dans lequel le dispositif d'antenne comprend en outre :
une deuxième unité de rejet de fréquence image pour éliminer le signal image ; et
une unité d'adaptation d'impédance pour adapter une impédance du dispositif d'antenne avec une impédance de l'unité de circuit RF et fournir le signal reçu, duquel le signal image est éliminé, à l'unité de circuit RF.

5. Dispositif d'antenne de rejet de fréquence image selon la revendication 4, dans lequel la deuxième unité de rejet de fréquence image est un filtre passe-bande positionné en parallèle à l'avant ou à l'arrière de l'unité d'adaptation d'impédance pour laisser passer seulement une fréquence (ω_{IM}) du signal image.

6. Dispositif d'antenne de rejet de fréquence image selon la revendication 4, dans lequel la deuxième unité de rejet de fréquence image est un filtre à encoche positionné en série à l'avant ou à l'arrière de l'unité d'adaptation d'impédance pour laisser passer toutes les fréquences sauf une fréquence (ω_{IM}) du signal image.
